# NEUE EUROPÄISCHE PATENTSCHRIFT

(11) **EP 0 415 905 B2**
(45) Veröffentlichungstag und Bekanntmachung des Hinweises auf die Entscheidung über den Einspruch: **16.04.1997**
(45) Hinweis auf die Patenterteilung: 27.10.1993
(21) Anmeldenummer: 90890238.0
(22) Anmeldetag: 09.08.1990
(51) Int. Cl.: A23L 2/00

(54) **Verfahren zur Auftrennung und Gewinnung der wesentlichen Inhaltstoffe von Frucht- bzw. Gemüsesäften**
Process for opening and winning essential stuff contents of fruit and vegtable juices
Procédé pour découdre et gagner des substances essentielles de jus de fruit et de légume

(30) Priorität: 29.08.1989 AT 2028/89
(43) Veröffentlichungstag der Anmeldung: 06.03.1991
(73) Patentinhaber: Ybbstaler Fruchtsaft Gesellschaft m.b.H., A-3363 Kröllendorf (AT)
(72) Erfinder: Bruch, Richard, A-3610 Weissenkirchen (AT)
(74) Vertreter: Atzwanger, Richard, Dipl.-Ing. Patentanwalt

(56) Entgegenhaltungen:
- EP-A- 0 206 239
- DE-B- 2 655 765
- FR-A- 2 041 431
- GB-A- 2 064 581
- US-A- 4 522 836
- PATENT ABSTRACTS OF JAPAN Band 8, Nr. 46 (C-212)(1483), 29. Februar 1984; & JP - A - 58205479 (KURITA SEIBI K.K.) 30.11.1983

## Beschreibung

Die gegenständliche Erfindung betrifft ein Verfahren zur Auftrennung und Gewinnung von Inhaltstoffen aus Frucht- bzw. Gemüsesaft.

Es besteht das Erfordernis, aus Frucht- bzw. Gemüsesäften die Aromastoffe, die Fruchtsäuren, die Süßstoffe und die basischen Mineralstoffe zu gewinnen. Die in den Frucht- bzw. Gemüsesäften enthaltenen Aromastoffe bestehen aus relativ leichtflüchtigen Alkoholen, Aldehyden und Estern, welche sich in einfacher Weise destillativ aus den Säften gewinnen lassen. Es ist bekannt, die Aromastoffe aus den Säften abzutrennen.

Bei den in Frucht- und Gemüsesäften enthaltenen organischen Säuren handelt es sich je nach Fruchtart hauptsächlich um Apfel-, Wein- und Zitronensäure, deren Herstellung bisher meist durch biologische Gärung oder durch Gewinnung ausWeinstein erfolgte. Eine großtechnische Isolierung aus Fruchtsäften ist bisher nicht bekannt. Diese Sauren sind als Geschmackstoffe in der Lebensmittelindustrie von Bedeutung. Der gegenständlichen Erfindung liegt unter anderem die Aufgabe zugrunde, diese Säuren in fruchtoriginärem Zustand zu gewinnen.

Der aus Zuckerrohr oder Zuckerrüben gewonnene Zucker stellt ein Disaccharid aus je einem Mol Glucose und einem Mol Fructose - der sogenannten Saccharose - dar. Im Gegensatz dazu bestehen die fruchtoriginären Süßstoffe von Frucht- und Gemüsesäften überwiegend aus Monozuckern, in der Regel aus Glucose, Fructose, und in geringer Menge aus dem Zuckeralkohol Sorbit. Aus ernährungsphysiologischen Gründen gewinnen diese Monozucker in letzter Zeit immer mehr an Bedeutung. Die Zusammensetzung der fruchtoriginären Süßstoffe variiert je nach der Fruchtart. So weist z.B. Birnensaft je nach der Sorte in der Trockensubstanz 50 Gew.-% bis 60 Gew.-% Fructose, 15 Gew.-% bis 20 Gew-% Glucose sowie 10 Gew.-% bis 15 Gew.-% Sorbit und nur etwa 10 Gew.-% Saccharose auf. Andere Zucker sind in geringen Mengen bis etwa 5 Gew.-% enthalten. Die Süße im Traubensaft besteht fast ausschließlich zu etwa gleichen Teilen aus Glucose und Fructose, wogegen in diesem Saft Sorbit und Saccharose nahezu vollkommen fehlen.

Die fruchtoriginären Süßstoffe sind unter dem Namen Fruchtsüße seit neuestem auch durch den Lebensmittelcodex erfaßt und als "ein aus Früchten gewonnenes Produkt, das die süßenden Stoffe der jeweiligen Fruchtart im originären Verhältnis enthält" definiert. Eine Gewinnung dieser fruchtoriginären Süßstoffe als solche ist bisher nicht beschrieben. Aus der einschlägigen Literatur geht nur hervor, daß zur Reinigung von Frucht- oder Ahornsäften von eingebrachten Verunreinigungen oder ursprünglich enthaltenen geschmackstörenden Beimengungen die Verwendung von Ionentauschern vorgeschlagen wurde.

Von Bedeutung ist weiters die Gewinnung der aus Früchten und Gemüsen stammenden basischen Mineralstoffe, die nauptsächlich aus Kalium bestehen, aber auch Calcium, Magnesium und Natrium enthalten. Sie können zur Mineralanreicherung von Lebensmitteln eingesetzt werden, wobei sie als Stoffe mit biologischem Ursprung gegenüber anderen Mineralquellen bevorzugt sind.

Wichtig ist die Verwendung von Kalium zur Stabilisierung von mikrobiologisch empfindlichen Enzymen, insbesondere solchen, die zur Behandlung im Getränkebereich verwendet werden. Mit Vorteil kann ein fruchtoriginäres Kalium für diesen Zweck eingesetzt werden.

Gegebenenfalls können die genannten basischen Mineralstoffe zumindest teilweise in der den fruchtoriginären Süßstoff enthaltenden Lösung verbleiben.

Die vorstehend gestellten Aufgaben werden erfindungsgemäß dadurch gelöst, daß die dort adsorbierten, organischen Säuren mittels wässeriger Mineralsäurelösung aus dem beladenen Harz verdrängt und aus der Verdrängerlösung gewonnen werden und daß das Substrat nach Abtrennung der Säuren zu einem fruchtoriginären Süßstoff eingedickt wird.

Vorzugsweise wird der Ausgangssaft vor der Auftrennung von groben Schwebstoffen befreit bzw. wird der Ausgangsseft vor der Auftrennung entaromatisiert. Weiters werden vorzugsweise dem Saft vorder Einwirkung des Anionentauscherharzes die basischen Mineralstoffe mit Hilfe eines Kationentauscherharzes zumindest teilweise entzogen und durch Spülen des Harzes mit wässeriger Säurelösung gewonnen. Weiters wird vorzugsweise das Substrat vor der Eindickung zu einem fruchtoriginären Süßstoff durch Einwirkung eines Adsorptionsharzes zumindest teilweise von Farbstoffen befreit.

Die Abtrennung der basischen Mineralstoffe, welche nicht unbedingt erforderlich ist, erfolgt, soferne sie durchgeführt wird, unmittelbar nach der Entaromatisierung.

Der bei der Abtrennung der Mineralstoffe verwendete Kationentauscher ist vorzugsweise ein makroporöses, vernetztes, stark saures Harz auf der Basis von sulfoniertem Polystyrene. Dieses Harz bindet die im Saft enthaltenen Kationen, wie die Alkali- und Erdalkalimetallkationen und Schwermetallkationen. Die Abtrennung der Schwermetallionen ist vor allem im Hinblick auf die gesundheidichen Aspekte der durch das erfindungsgemäße Verfahren gewonnenen Produkte von Bedeutung.

Sobald der Kationentauscher ausreichend beladen ist, wird er zuerst durch Spülen mit einer wässerigen Säurelösung von den Kationen befreit. Anschließend erfolgt eine mechanische Rückspülung des Harzes mit Wasser sowie dessen Regenerierung mittels Schwefelsaure. Zwischen den einzelnen Verfahrensschritten können kurze Zwischenspülungen mit Wasser erfolgen.

Die erste Säurespülung des beladenen Kationentauschers erfolgt vorzugsweise mit schwefeliger Säure, die als flüchtige Säure in der Lebensmittelindustrie bevorzugt zum Einsatz kommt. Die Konzentration der Säurelösung liegt vorzugsweise zwischen 1% und 10%, berechnet als schwefelige Säure, bzw. von 250mVal/l bis 2 500 mVal/l.

Die Verdrängung des SO₂ aus dieser Lösung erfolgt vorzugsweise durch Zusatz von Fruchtsäuren, insbesondere solchen, wie sie im Zuge des Verfahrens später gewonnen werden, wobei anschließend ein Siedeprozeß durchgeführt wird.

Der von den Kationen befreite Saft gelangt in einen mit einem Anionentauscher gefüllten Behälter, in welchem die fruchtoriginären Säuren gleichzeitig mit anderen gegebenenfalls enthaltenen Säuren abgetrennt werden. Als Harz fürdiesen Zweck hat sich ein schwach basisches, makroporöses Anionentauscherharz mit einer Styrol-Divinylbenzol-Polymermatrix und daran gebundenen funktionellen tertiären Aminogruppen als vorteilhaft erwiesen. Überraschenderweise zeigte sich, daß von einem solchen Harz die gebundenen organischen Säuren durch Spülen mit einer wässerigen Mineralsäurelösung verdrängtwerden können, wodurch die Fruchtsäuren in wässeriger Lösung als solche gewonnen werden. Verwendet man zur Verdrängung der Säuren von dem Ionentauscherharz flüchtige Mineralsäuren, wie schwefelige Säure, Kohlensäure oder gegebenenfalls Salzsäure, so kann die wässerige Säurelösung relativ leicht von der Mineralsäure befreit werden. Bevorzugt wird die Verwendung von schwefeliger Säure bzw. von Kohlensäure, welche durch Erhitzen auf Temperaturen bis zu 100°C unter vermindertem Druck leicht aus der Lösung entfernt werden können.

Die Konzentration der Säurelösung zum Verdrängen der Säureanionen von dem Anionentauscherharz liegt in derselben Größenordnung wie bei der Spülung des Kationentauschers. Bei der Abtreibung des SO₂ erfolgt gleichzeitig auch eine Eindickung der Lösung, die zur Gewinnung der Säuren erfordenich ist. Nach der Verdrängung der organischen Säuren aus dem Anionentauscher erfolgt nach einer mechanischen Rückspülung des Harzes mit Wasser die Regenerierung desselben mittels verdünnter Natronlauge. Die mechanischen Rückspülvorgänge vor der Regenerierung der Harze dienen dazu, das Harzbett aufzulockern sowie aus dem Fruchtsaft stammende Ablagerungen sowie entstandenen Harzabrieb aus dem Ionentauscherbehälter zu entfernen.

Die Abtrennung der Aromastoffe aus den Säften ist deshalb vor der Behandlung derselben mit Ionentauschern zweckmäßig, da die Aromastoffe sonst an den Harzen hängen bleiben und diese verunreinigen bzw. verloren gehen.

Nach der Behandlung mit Kationen- und Anionentauschern enthält das Substrat im wesentlichen nur mehr die fruchteigenen Süßstoffe, nämlich hauptsächlich Fructose, Glucose und Sorbit sowie - in Abhängigkeit von der Fruchtart - geringe Anteile an Saccharose. Je nach Art derverwendeten Fruchtsäfte variiert das Verhältnis der Zuckerbestandteile zueinander. Da dieses Verhältnis während der gesamten Behandlung nicht verändert wird, bleiben in dem durch dieses Verfahren gewonnenen Süßstoff die ursprünglichen, durch die Art, Sorte, Reife, den Standort u.dgl. der Früchte bestimmten Mengenverhältnisse der Süßstoffbestandteile erhalten.

Da das in der bisher beschriebenen Weise behandelte Substrat je nach Ausgangsflucht u.a. durch phenolische Verbindungen stark gefärbt sein kann, wird es mit Hilfe von Adsorptionsmitteln, in der Regel auf Harzbasis, zumindest teilweise von diesen Farbstoffen befreit. Dieser Vorgang wird als Polishing bezeichnet. Hochporöse, vernetzte Acryl-Polymerharze eignen sich für diese Verfahrensstufe am besten. Es sind jedoch für diesen Zweck auch andere Adsorptionsmittel möglich.

Wegen der begrenzten Aufnahmekapazität der Harze, welche in regelmäßigen Abständen regeneriert werden müssen, erfolgt die Verfahrensführung diskontinuierlich. Zu diesem Zweck wird der in der Anlage befindliche Restsaft mittels Wasser zur Gänze aus den Harzen gedrückt, wodurch diese für die Weiterbehandlung bzw. für die Regenerierung vorbereitet werden. Hiebei muß eine Durchmischung der aufeinander folgenden Produkte, insbesondere eine Durchmischung von Fruchtsaft und Wasser, verhindert werden.

Die aus den Polisher abziehende Flüssigkeit stellt die gereinigte Süßstofflösung dar, welche vorzugsweise auf sirupartige Konsistenz eingeengt wird. Hierdurch wird eine einfache Abfüllung und Manipulation möglich. Eine Trocknung der erhaltenen Süßstoffe ist zwar denkbar, jedoch ist sie aufgrund der hygroskopischen Eigenschaften der Substanz sehr aufwendig.

Durch das erfindungsgemäße Verfahren wird unter anderem ein neutral schmeckender Süßstoff gewonnen, welcher im Bäckereiwesen, insbesondere in der Zuckerbäckerei, weiters als Süßstoff für Getränke, Milchmixprodukte, Joghurt, Eis, Marmelade, Kompotte, etc.,vorzüglich geeignet ist. Die damit erzeugten Produkte erhalten eine angenehme fruchtige Süße sowie eine besondere Geschmacksfülle.

Das erfindungsgemäße Verfahren wird mit Vorteil in einer Anlage durchgeführt, wie sie aus der beiliegenden Zeichnung ersichtlich ist. Es zeigen:

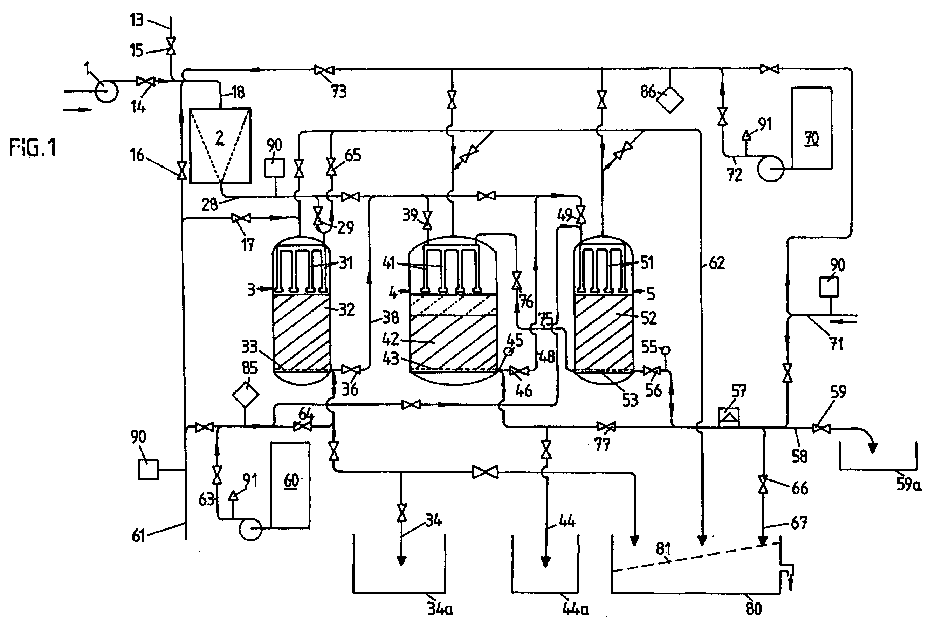

- Fig. 1: eine schematische Darstellung einer Anlage zur Durchführung des erfindungsgemäßen Verfahrens und
- die Fig. 2 bis 9: Fließschemata zur Darstellung unterschiedlicher Verfahrensabläufe, wobei die jeweils durchflossenen Bauteile der Anlage markiert sind.

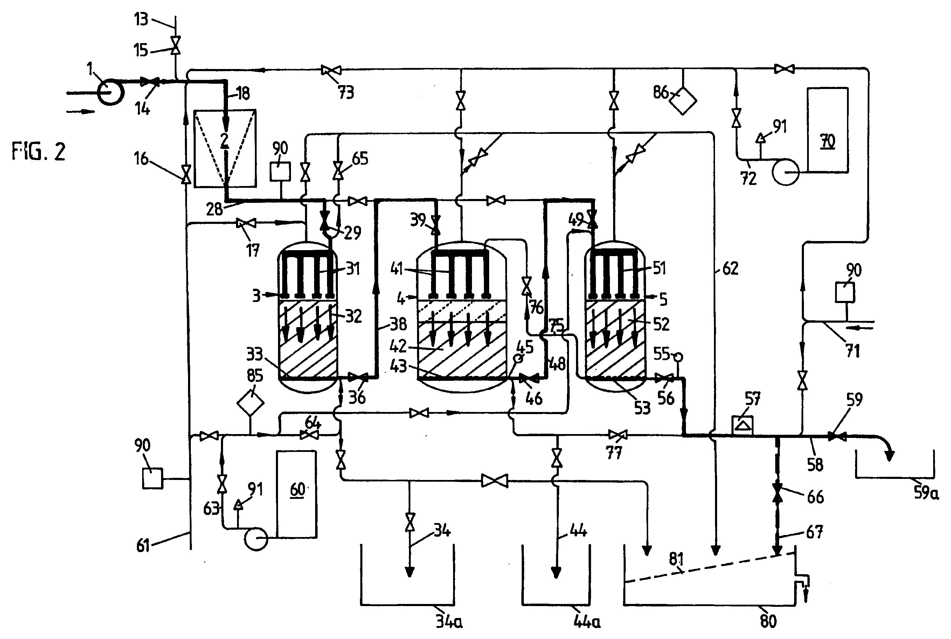

- In Fig. 2: ist die Gewinnung der entmineralisierten Fruchtsüße,

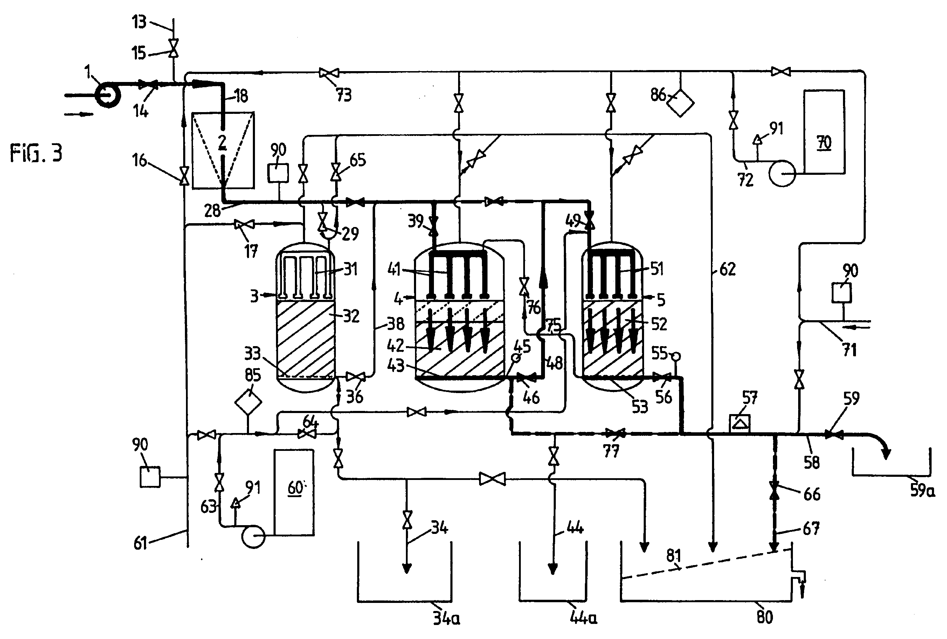

- in Fig. 3: die gemeinsame Gewinnung von Fruchtsüße und Mineralstoffen,

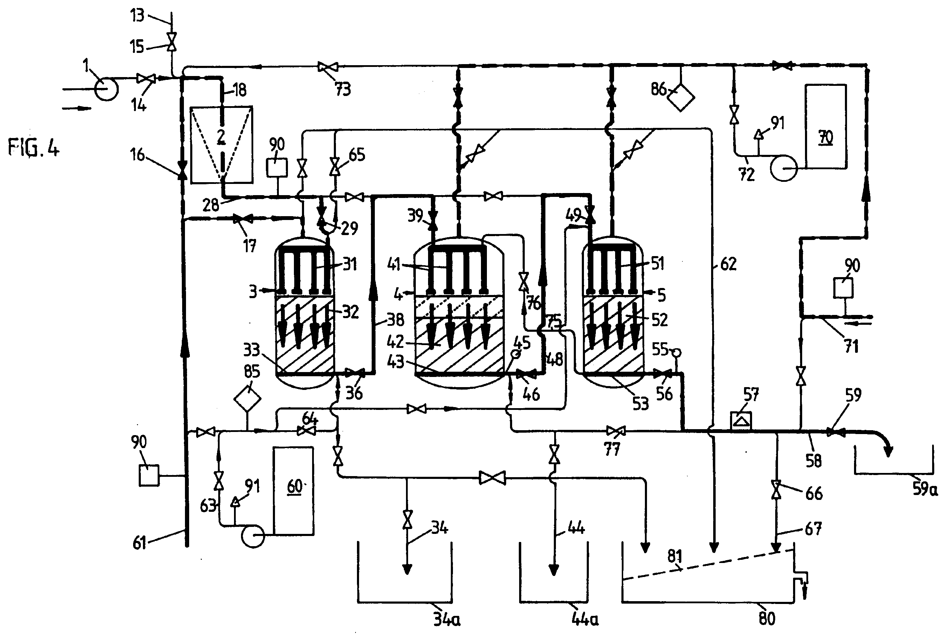

- in Fig. 4: die Verdrängung des Produktes mit Wasser,

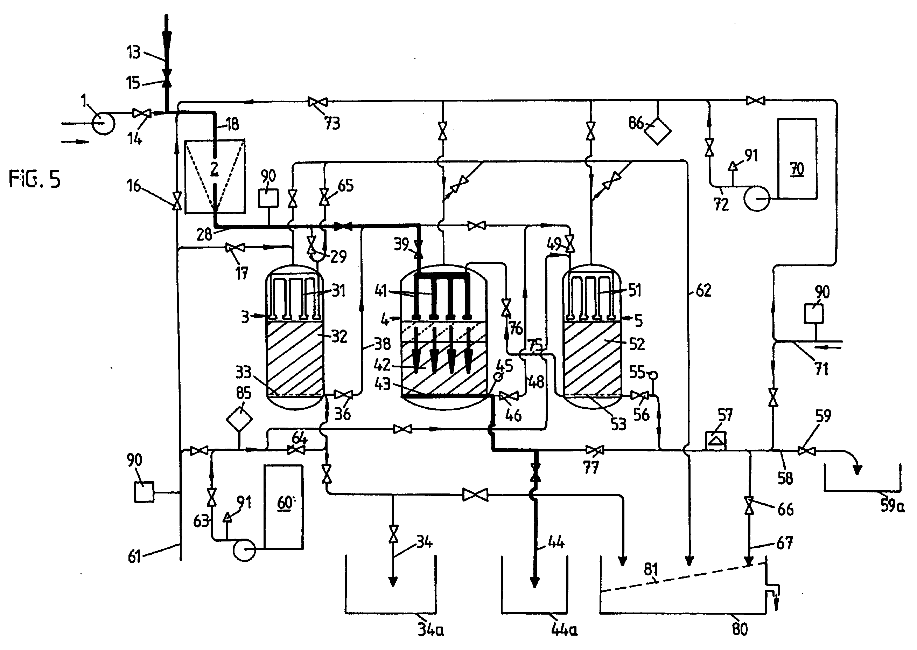

- in Fig. 5: die Extraktion der Fruchtsäuren,

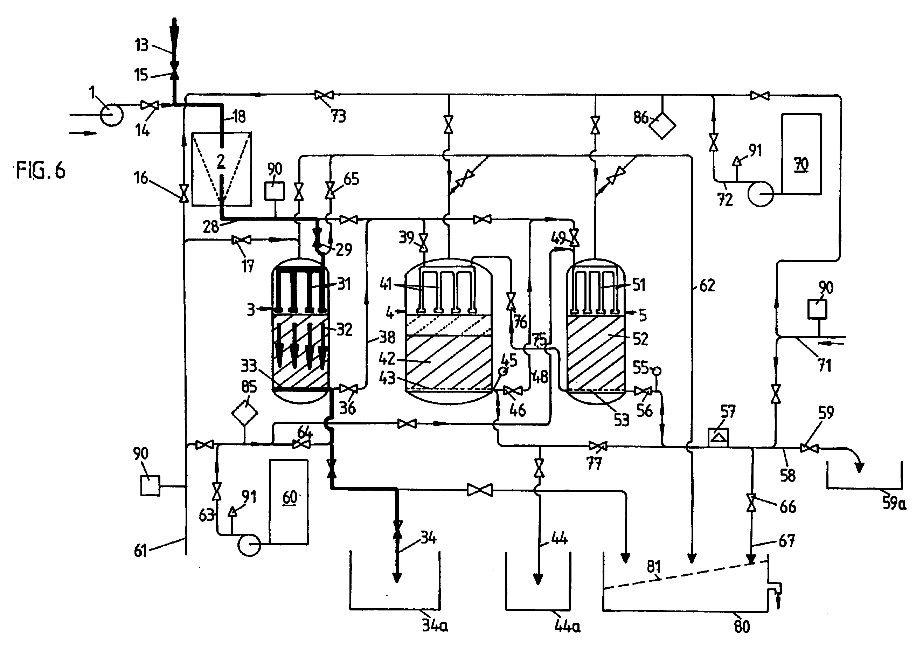

- in Fig. 6: die Extraktion der basischen Mineralstoffe,

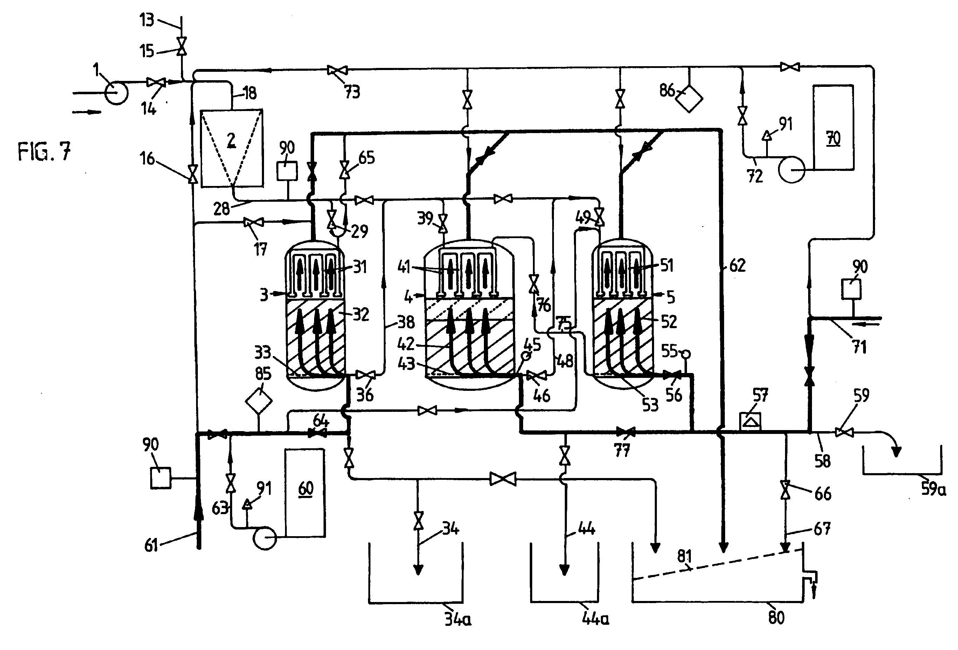

- in Fig. 7: die Rückspülung mit Wasser,

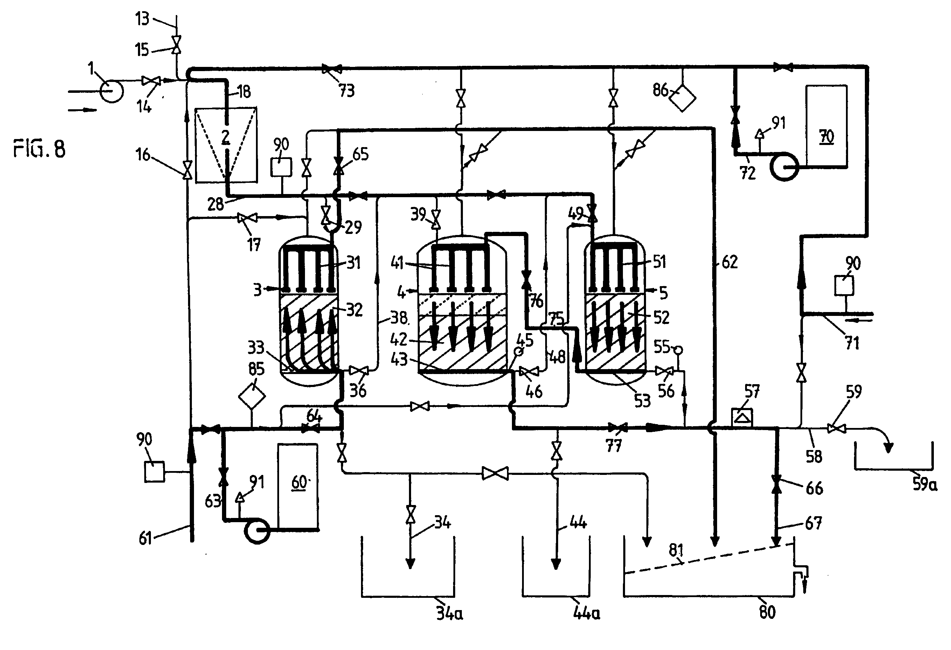

- in Fig. 8: die Regenerierung und

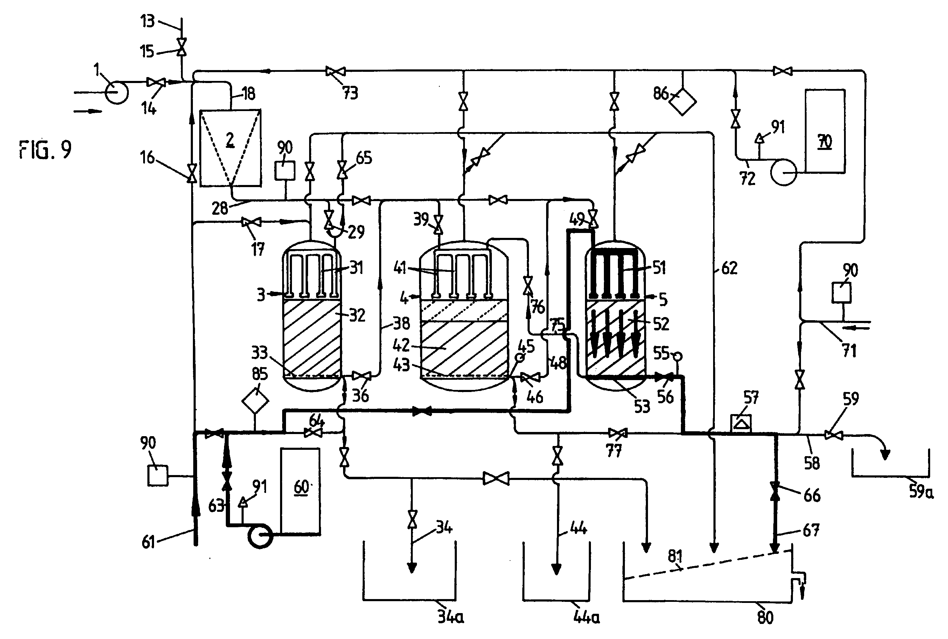

- in Fig. 9: eine Säurespülung des Polishers dargestellt.

Eine Anlage zur Durchführung des erfindungsgemäßen Verfahrens enthält einen Anionentauscherbehälter und einen Polisher sowie gegebenenfalls einen Kationentauscherbehälter, welche Behälter miteinander über Leitungen verbunden sind, sowie Einrichtungen zum Spülen und Regenerieren der Austauscher- und Adsorptionsharze.

Diese Anlage weist eine Pumpe 1 auf, von welcher eine Leitung 18 mit einem Ventil 14 zu einem Filter 2 führt. In diese Leitung 18 mündet eine Leitung 13 mit einem Ventil 15. Vom Filter 2 führt eine Leitung 20 entweder direkt oder über den Kationentauscherbehälter 3 und eine Leitung 38 zum Anionentauscherbehälter 4. Vom Kationentauscherbehälter 3 führt eine Abflußleitung 34 zu einem Produkttank 34a. Vom Anionentauscherbehälter 4 führt eine Leitung 44 direkt zu einem Produkttank 44a bzw. es führt eine Leitung 48 zum Polisher 5, von welchem eine Leitung 58 zu mindestens einem Tank 59a für das Fertigprodukt führt.

Zudem sind weitere Flüssigkeitsbehälter Meßgeräte, zusätzliche Pumpen und diese Bestandteile miteinander verbindende Leitungen vorgesehen, wobei sich in den Leitungen Ventile befinden, welche jeweils in Abhängigkeit von der Betriebsart gesteuert werden. Diese anderen Bestandteile sind nachstehend anhand der unterschiedlichen Betriebsarten der Anlage erläutert.

Anhand der Fig.2 ist die Verfahrensführung zur Gewinnung eines fruchtoriginären Süßstoffes dargestellt, aus dem die Kationen und die Säuren abgetrennt worden sind. Ausgangsprodukt hierfür ist ein Fruchtsaft oder ein Fruchtsaftkonzentrat, das z.B. einen Trockensubstanzgehalt von etwa 30% aufweist. Dieses Substrat wird mittels der Pumpe 1 über die Leitung 18, über das als Feinsieb, vorzugsweise in Form eines Sackfilters, ausgebildete 2, Leitung 28 und ein Ventil 29 zum Kationenaustauscherbehälter 3 geleitet. In diesem wird es mit Hilfe einer Verteilereinrichtung 31 überein im Behälter 3 befindliches Kationentauscherharz 32, das auf einem Sieb 33 aufliegt, geleitet. Beim Durchsetzen des Kationentauscherharzes 32 wird das Substrat entkationisiert, wodurch insbesondere die als Aschebildner wirkenden Alkali- und Erdalkalimetallionen entfernt werden. Unter dem Sieb 33 wird das entkationisierte Substrat durch eine Dränagevorrichtung abgezogen.

Hierauf wird das Substrat über ein Ventil 36, über die Leitung 38 und über ein Ventil 39 in den Anionentauscherbehälter 4 geleitet. In diesem wird es mittels einer Verteilereinrichtung 41 über ein in diesem Behälter 4 befindliches Anionentauscherharz 42 verteilt. Beim Durchsetzen des Anionentauscherharzes 42 wird das Substrat von Säuren befreit, wobei ihm gleichzeitig auch ein Teil der Farbstoffe entzogen wird. Das Anionentauscherharz 42 liegt auf einem Sieb 43 auf. Unterhalb des Siebes 43 gelangt das entanionisierte Substrat über eine Dränagevorrichtung und ein Ventil 46 in die Leitung 48, über welche es durch ein Ventil 49 dem Polisher 5 zugeführt wird. Im Polisher 5 wird das Substrat mittels einer Verteilereinrichtung 51 über ein auf einem Sieb 53 aufliegendes Adsorptionsharz 52 verteilt und durchsetzt dieses.

Durch die vorstehend erläuterte Behandlung ist das Substrat, das über eine Dränagevorrichtung in die Leitung 58 gelangt, in welcher sich Ventile 56 und 59 befinden, entionisiert und von Farbstoffen befreit. Der Zuckergehalt dieses Substrats wird durch ein Refraktometer 57 gemessen. Hierdurch kann auf den Trockensubstanzgehalt geschlossen werden. In Abhängigkeit von der Anzeige des Refraktometers 57 wird das Substrat bei einem einstellbaren Mindesttrockengehalt von beispielsweise 5% über das Ventil 59 in den Produkttank 59a abgeleitet. Zu Beginn des Verfahrens in der Anlage noch befindliches Wasser wird über eine Leitung 67 mit einem Ventil 66 in einen Abwassertank 80 abgeleitet.

Wie aus dem Fließschema der Fig. 3 ersichtlich ist, kann die Anlage zur Erreichung der angestrebten Flexibilität auch derart eingesetzt werden, daß nur der Anionentauscherbehälter 4 und bzw. oder der Polisher 5 betrieben werden.

Am Ausgang der Behälter 4 und 5 sind weiters Konduktometer 45 bzw. 55, nämlich Leitfähigkeitsmeßgeräte, vorgesehen, durch welche der Erschöpfungsgrad der Ionentauscherharze 42, 52 gemessen und angezeigtwird. Sobald ein eingestellter Grenzwert erreicht wird, wird durch das betreffende Konduktometer 45 bzw. 55 ein Signal abgegeben, worauf zuerst das am Beginn der Anlage befindliche Ventil 16 und hierauf das Ventil 17 derart umgeschaltet werden, daß - wie dies in Fig. 4 dargestellt ist - Wasser über eine Leitung 61 und kurzzeitig auch über das Filter 2 in den Behälter 3 einströmt, welches durch die Behälter 3, 4 und 5 in der gleichen Weise, wie dies vorstehend für das Substrat beschrieben wurde, hindurchgeführt wird. Durch das Wasser wird das in der Anlage befindliche Subtrat in den Produkttank 59a befördert. In den oberen Bereichen der Behälter 4 und 5 bilden sich durch Einströmen des Wassers Mischzonen aus. Zusätzlich zum Leitungswasser kann den oberen Bereichen der Behälter 4 und 5 über eine Leitung 71 entionisiertes Wasser zugeführt werden.

Fig. 5 zeigt die Säurespülung des Anionentauschers 4 zur Verdrängung der organischen Säuren. Vorzugsweise wird diese Verdrängung mit schwefeliger Säure (H₂SO₃) vorgenommen. Versuche mit Kohlensäure zeigten ebenfalls gute Ergebnisse. Die schwefelige Säure wird dem System bei geschlossenem Ventil 14 über die Leitung 13 zugeführt und gelangtdirekt in den Anionentauschbehälter 4. Die Verdrängungslösung gelangtüber die Leitung 44 in den Produkttank 44a.

In Fig. 6 ist die Gewinnung der Fruchtbasen dargestellt. Sobald der Kationentauscher 3 beladen ist, wird nach Verdrängung des Fruchtsaftes aus dem Kationentauscher 3 mit Hilfe von Wasser dieser mit schwefeliger Säure, welche dem System durch die Leitung 13 zugeführt wird, gespült.

Die Arbeitsweise nach den Fig. 5 und 6 kann auch gleichzeitig erfolgen, wobei die beiden Verfahrensschritte kombiniert werden können.

In Fig. 7 ist die Rückspülung dargestellt, welche dazu dient, die Harze mechanisch zu reinigen, indem in diesen befindliche Feststoffanteile abgeführt werden. Dazu werden über die Leitung 61 dem Kationentauscherbehälter 3 normales Wasser und über die Leitung 71 dem Anionentauscherbehälter 4 sowie dem Polisher 5 entionisiertes Wasser zugeführt. Das Wasser strömt diesen Behältern 3, 4 und 5 von unten her zu und verläßt diese über im oberen Bereich vorgesehene Auslässe, worauf es über eine Leitung 62 in den Abwasserbehälter 80 gelangt.

In Fig. 8 ist das Fließschema für die Regenerierung der in den Behältern 3, 4 und 5 enthaltenen Harze dargestellt. Um das Kationentauscherharz 32 regenerieren zu können, ist ein Tank 60 mit konzentrierter Schwefelsäure vorgesehen. Über eine Leitung 63 wird Schwefelsäure mit über die Leitung 61 zugeführtem Leitungswasser gemischt, wodurch vorzugsweise 2 %-ig verdünnte Schwefelsäure über ein Ventil 64 im Gegenstrom zur Strömung des Substrates, d.h. von unten nach oben, durch das Kationentauscherharz 32 hindurchgeführt wird. Durch den Gegenstrom wird beim Regeneriervorgang ein guter Wirkungsgrad gewährleistet. Die Ableitung erfolgt über die Verteilereinrichtung 31 und über ein weiteres Ventil 65, wobei die Regenerierflüssigkeit in den Abwasserbehälter 80 abströmt. Im oberen Bereich des Behälters 80 ist ein Sieb 81 vorgesehen, durch welches mitgeführte Harzteilchen abgetrennt werden. Anschließend erfolgt ein Nachspülen mit Wasser, wobei die Nachspülung in der gleichen Richtung wie die Regenerierspülung erfolgt.

Das Anionentauscherharz 42 wird dadurch regeneriert, daß aus einem weiters vorgesehenen Tank 70, der mit 50 %-iger Natronlauge gefüllt ist, diese dem über die Leitung 71 zugeführten entionisierten Wasser zugemischt wird, worauf vorzugsweise 2 %-ig verdünnte Natronlauge über eine Leitung 72, ein Ventil 73 und das Filter 2 mittels der Leitung 28 dem Polisher 5 zugeführt und über die Verteilereinrichtung 51 ausgebracht wird. Diese Flüssigkeit durchsetzt das Polisherharz 52 und gelangt über eine Leitung 75 sowie ein Ventil 76 in den Anionentauscherbehälter 4, wo sie über die Verteilereinrichtung 41 über das Anionentauscherharz 42 ausgebracht wird. Nach dem Durchgang durch das Anionentauscherharz 42 wird diese Regenerierflüssigkeit in weiterer Folge über das Ventil 66 gleichfalls dem Sammelbehälter 80 zugeleitet. Anschließend wird in der gleichen Weise eine Nachspülung mit enthärtetem Wasser durchgeführt.

Da die Adsorptionsharze schwach kationenbindende Eigenschaften aufweisen, besteht weiters - wie dies in Fig. 9 dargestellt ist - die Möglichkeit, den Polisher 5 über die Verteilereinrichtung 51 kurzzeitig mit verdünnter Schwefelsäure zu spülen. In der Folge werden alle Ionenreste mittels entionisiertem Wasser vollständig ausgespült.

Der Säuregehalt wird durch ein Säuremeßgerät 85 und die Laugenstärke wird durch ein Laugenmeßgerät 86 festgestellt. Die Durchflußmengen werden durch einen Durchflußmesser 90 kontrolliert und der Druck wird durch einen Hochdruckschalter 91 kontrolliert.

Die Siebe 33, 43 und 53 in den Behältern 3, 4 und 5 und die darunter liegenden Dränagevorrichtungen sind in Beton eingelassen, um die erforderliche Stabilität zu erzielen.

## Patentansprüche

1. Verfahren zur Auftrennung und Gewinnung von Inhaltstoffen aus Frucht- bzw. Gemüsesäften, **dadurch gekennzeichnet**, daß der Frucht- bzw. Gemüsesaft, ein Konzentrat desselben oder ein zumindest teilweise rückverdünntes Konzentrat desselben zur Abtrennung der enthaltenen Säuren über einen Anionentauscher geleitet wird, daß die dort adsorbierten, organischen Säuren mittels flüchtiger Mineralsäuren aus dem beladenen Harz verdrängt und aus der Verdrängerlösung gewonnen werden und daß das restliche Substrat nach Abtrennung der Säuren zu einem fruchtoriginären Süßstoff eingedickt wird.

2. Verfahren nachPatentanspruch 1, **dadurch gekennzeichnet**, daß der Ausgangssaft vor der Auftrennung von groben Schwebstoffen befreit wird.

3. Verfahren nach Patentanspruch 1 oder 2, **dadurch gekennzeichnet**, daß der Ausgangssaft vor der Auftrennung entaromatisiert wird.

4. Verfahren nach einem der Patentansprüche 1 bis 3, **dadurch gekennzeichnet**, daß dem Saft vor der Einwirkung des Anionentauscherharzes die basischen Mineralstoffe mit Hilfe eines Kationentauscherharzes zumindest teilweise entzogen und durch Spülen des Harzes mit wässeriger Säurelösung gewonnen werden.

5. Verfahren nach einem der Patentansprüche 1 bis 4, **dadurch gekennzeichnet**, daß das Substrat vor der Eindickung zu einem fruchtoriginären Süßstoff durch Einwirkung eines Adsorptionsharzes zumindest teilweise von Farbstoffen befreit wird.

6. Verfahren nach einem der Patentansprüche 1 bis 5, **dadurch gekennzeichnet**, daß als Anionentauscher ein makroporöses, schwach basisches Harz mit einer Styrol-Divinylbenzol-Polymermatrix und daran gebundenen funktionellen tertiären Aminogruppen verwendet wird.

7. Verfahren nach einem der Patentansprüche 1 bis 6, **dadurch gekennzeichnet**, daß die an den Anionentauscher gebundenen organischen Säuren mit schwefeliger Säure oder Kohlensäure aus dem Harz verdrängt werden.

8. Verfahren nach Patentanspruch 7, **dadurch gekennzeichnet**, daß bei Verwendung von schwefeliger Säure die organischen Säuren in der Verdrängungslösung durch Temperaturerhöhung bis etwa 100°C unter vermindertem Druck bei gleichzeitiger Verdampfung von Wasser von dem SO₂ befreit werden.

9. Verfahren nach einem der Patentansprüche 1 bis 8, **dadurch gekennzeichnet**, daß zur Abtrennung der basischen Mineralstoffe ein makroporöses, stark saures Kationentauscherharz, vorzugsweise ein sulfoniertes, vernetztes Harz auf Basis Polystyrol, verwendet wird.

10. Verfahren nach einem der Patentansprüche 1 bis 9, **dadurch gekennzeichnet**, daß der beladene Kationentauscher mit schwefeliger Säure behandelt und die basischen Mineralstoffe als Lösung von Sulfiten gewonnen werden.

11. Verfahren nach einem der Patentansprüche 1 bis 10, **dadurch gekennzeichnet**, daß die Säurebehandlung der beladenen Austauscherharze mit Säuren einer Konzentration von 1% bis 10%, berechnet als H₂SO₃, bzw. von 250 mVal/l bis 2500 mVal/l erfolgt.

12. Verfahren nach einem der Patentansprüche 1 bis 11, **dadurch gekennzeichnet**, daß die durch Säurespülung des Kationentauscherharzes gewonnene Basenlösung, gegebenenfalls unter Temperaturerhöhung, mit Fruchtsäuren angesäuert und dadurch destillativ vom SO₂ befreit wird.

13. Verfahren nach einem der Patentansprüche 1 bis 12, **dadurch gekennzeichnet**, daß die Regenerierung der Ionentauscherharze in an sich bekannter Weise durch Einwirkung von verdünnter Schwefelsäure auf das Kationentauscherharz und von verdünnter Natronlauge auf das Anionentauscherharz erfolgt.

14. Verfahren nach einem der Patentansprüche 1 bis 13, **dadurch gekennzeichnet**, daß als Adsorptionsharz zur Entfernung der unerwünschten Farbstoffe ein hochporöses, vernetztes AcrylPolymerharz verwendet wird.

## Claims

1. A process for separating and extracting substances contained in fruit and vegetable juices, characterized in that the fruit or vegetable juice, a concentrate thereof or an at least partially rediluted concentrate thereof is conveyed over an anion exchanger to separate the acids contained therein, in that the organic acids adsorbed there are displaced from the charged resin by means of volatile mineral acids solution and extracted from the displacement solution and in that the remaining substrate is concentrated into a sweetener of fruit origin after removal of the acids.

2. A process according to claim 1, characterized in that the starting juice is freed of coarse suspended matter before separation.

3. A process according to claim 1 or claim 2, characterized in that the starting juice is de-aromatized before separation.

4. A process according to any one of claims 1 to 3, characterized in that, before the action of the anion exchange resin, the basic mineral substances are at least partially removed from the juice with the aid of a cation exchange resin and are extracted by scouring the resin with aqueous acid solution.

5. A process according to any one of claims 1 to 4, characterized in that the substrate is freed at least partially of colourants by the action of an adsorption resin before concentration into a sweetener of fruit origin.

6. A process according to any one of claims 1 to 5, characterized in that a macroporous, weakly basic resin with a styrene-divinyl benzene-polymer matrix and functional tertiary amino groups bonded thereto is used as the anion exchanger.

7. A process according to any one of claims 1 to 6, characterized in that the organic acids bonded to the anion exchanger are displaced out of the resin with the aid of sulphurous acid or carbonic acid.

8. A process according to claim 7, characterized in that, with the use of sulphurous acid, the organic acids in the displacement solution are released from the SO₂ by increasing the temperature to approximately 100°C under reduced pressure with simultaneous water evaporation.

9. A process according to any one of claims 1 to 8, characterized in that a macroporous, strongly acidic cation exchange resin, preferably a sulphonated, cross-linked resin on a polystyrene base is used to remove the basic mineral substances.

10. A process according to any one of claims 1 to 9, characterized in that the charged cation exchanger is treated with sulphurous acid and the basic mineral substances are extracted as a solution of sulphites.

11. A process according to any one of claims 1 to 10, characterized in that the acid treatment of the charged exchange resins is effected with acids of a concentration of from 1% to 10%, calculated as H₂SO₃, or from 250 mg equiv./l to 2500 mg equiv./l.

12. A process according to any one of claims 1 to 11, characterized in that the base solution extracted by acid scouring of the cation exchange resin, optionally with a temperature increase, is acidified with fruit acids and thereby released from the SO₂ by distillation.

13. A process according to any one of claims 1 to 12, characterized in that regeneration of the ion exchange resins is effected in a manner known per se by the action of dilute sulphuric acid on the cation exchange resin and of dilute caustic-soda solution on the anion exchange resin.

14. A process according to any one of claims 1 to 13, characterized in that a highly porous, cross-linked acrylic polymer resin is used as the adsorption resin for removing the undesired colourants.

## Revendications

1. Procédé destiné à séparer et à extraire des substances contenues dans des jus de fruits ou de légumes, caractérisé en ce que le jus de fruit ou de légume, un concentré de celui-ci ou un concentré au moins partiellement redilué de celui-ci est envoyé, en vue de la séparation des acides qu'il contient, à travers un échangeur d'anions, en ce que les acides organiques qui y sont adsorbés, sont déplacés de la résine chargée, au moyen d'une solution d'acides minéraux volatils et sont extraits de la solution de déplacement, et en ce qu'après séparation des acides, le substrat restant est concentré pour donner un édulcorant naturel de fruit.

2. Procédé selon la revendication 1, caractérisé en ce que le jus d'origine est débarrassé, avant la séparation, des matières grossières en suspension.

3. Procédé selon les revendications 1 ou 2, caractérisé en ce que le jus d'origine est désarômatisé avant la séparation.

4. Procédé selon l'une des revendications 1 à 3, caractérisé en ce qu'avant l'action de la résine d'échange d'anions, les substances minérales basiques sont au moins partiellement extraites du jus à l'aide d'une résine d'échange de cations et sont obtenues par lavage de la résine avec une solution aqueuse d'acide.

5. Procédé selon l'une des revendications 1 à 4, caractérisé en ce qu'avant sa concentration pour donner un édulcorant naturel de fruit, le substrat est au moins partiellement débarrassé des colorants, par action d'une résine d'adsorption.

6. Procédé selon l'une des revendications 1 à 5, caractérisé en ce qu'on utilise comme échangeur d'anions une résine macroporeuse, légèrement basique avec une matrice de styrol-divinylbenzol-polymère et des groupes aminés tertiaires fonctionnels, liés à celle-ci.

7. Procédé selon l'une des revendications 1 à 6, caractérisé en ce que les acides organiques, liés aux échangeurs d'anions, sont déplacés de la résine, à l'aide de l'acide sulfurique ou de l'acide carbonique.

8. Procédé selon la revendication 7, caractérisé en ce que dans le cas où l'on utilise de l'acide sulfurique, les acides organiques contenus dans la solution de déplacement sont débarrassés du SO₂, par élévation de la température jusqu'à environ 100 °C, sous une pression réduite, avec évaporation simultanée de l'eau.

9. Procédé selon l'une des revendications 1 à 8, caractérisé en ce que pour séparer les substances minérales basiques on utilise une résine d'échange de cations macroporeuse, fortement acide, de préférence une résine réticulée, sulfonée, à base de polystyrène.

10. Procédé selon l'une des revendications 1 à 9, caractérisé en ce que l'échangeur de cations chargé est traité avec de l'acide sulfurique et les substances minérales basiques sont obtenues sous la forme d'une solution de sulfite.

11. Procédé selon l'une des revendications 1 à 10, caractérisé en ce que le traitement acide des résines d'échange chargées s'effectue avec des acides d'une concentration comprise entre 1 % et 10 %, calculée en tant que H₂SO₃, ou de 250 mVal/l à 2 500 mVal/l.

12. Procédé selon l'une des revendications 1 à 11, caractérisé en ce que la solution basique obtenue par lavage acide de la résine d'échange de cations, est acidifiée avec des acides de fruit, éventuellement avec augmentation de la température, et est ainsi débarrassée du SO₂, par distillation.

13. Procédé selon l'une des revendications 1 à 12, caractérisé en ce que la régénération des résines d'échange d'ions s'effectue de manière connue en soi, par action d'acide sulfurique dilué sur la résine d'échange de cations et de lessive de soude diluée sur la résine d'échange d'anions.

14. Procédé selon l'une des revendications 1 à 12, caractérisé en ce qu'on utilise comme résine d'adsorption, pour éliminer les colorants indésirables, une résine polymère acrylique réticulée, très poreuse.
